# EUROPEAN PATENT APPLICATION

(11) **EP 4 641 048 A1**
(43) Date of publication of application: **29.10.2025**
(21) Application number: 24382440.6
(22) Date of filing: 23.04.2024
(51) Int. Cl.: F16H 3/091, F16H 3/08

(54) **GEARBOX FOR VEHICLES**

(71) Applicant: XIU RDI, S.L., 17243 Llambilles Gerona (ES)
(72) Inventor: SERRA ROQUETA, Josep, 17243 LLAMBILLES (Girona) (ES)
(74) Representative: Herrero & Asociados, S.L.

(57) **Abstract**

The gearbox comprises a first, second and third primary gearwheels (11, 12, 13); a first, second and third secondary gearwheels (21, 22, 23); and a first and second movable elements (3, 4), such that the gearbox can be positioned in a first gear wherein the first primary gearwheel (11) is engaged with the first secondary gearwheel (21); a second gear in which the second primary gearwheel (12) is engaged with the second secondary gearwheel (22); a third gear in which the third primary gearwheel (13) is engaged with the third secondary gearwheel (23); and a fourth gear in which one of the first movable element (3) or the second movable element (4) is in the active position and engages together two of the secondary gearwheels (21, 22, 23), causing a reduction or a multiplication of the gear.

## Description

### Object of the invention

The present invention relates to a gearbox for vehicles, in particular for motorbikes, electric bicycles, electric tricycles and the like, which allows four different gears to be obtained with three sets of gearwheels.

### Background to the invention

In a motorbike engine, a mechanical device known as a 'gearbox' is essential to facilitate the operation of the engine in the stable speed range between the maximum torque and power gears.

In the gearbox there is a shaft called the primary shaft, which, at one end, receives the movement of the engine crankshaft through the primary transmission by means of gears and a corresponding clutch.

On this primary shaft are mounted gears or gearwheels which are located opposite other gears on a shaft known as the secondary shaft of the gearbox. This secondary shaft, via the secondary transmission, transmits the movement to the motorbike's drive wheel.

In this way it is possible to obtain different angular speeds of rotation of the secondary shaft for the same speed of the primary shaft, or, in other words, different output torques for the same input torque.

Among the known solutions, the most common is that six gearwheels are arranged on the primary shaft and another six gearwheels are arranged on the secondary shaft, so that depending on how these gearwheels are paired, the secondary shaft rotates at six different gears, with the same speed as the primary shaft.

In addition, it has been shown that six different gears are not necessary for electric motorbikes, but that four gears are sufficient.

### Description of the invention

Therefore, an objective of the present invention is to provide a gearbox for vehicles, which is as simple and inexpensive as possible, by achieving four gears by means of three sets of gearwheels.

With the gearbox for vehicles of the invention, the aforementioned disadvantages are solved, with other advantages that will be described below.

The gearbox for vehicles according to the present invention is described in claim 1, and the dependent claims include additional features that are optional.

In particular, the gearbox for vehicles comprises:
- a first, second and third primary gearwheels; and
- a first, second and third secondary gearwheels; and
- a first and second movable elements which are movable between an active and an inactive position,
so that the gearbox can be placed in:
- a first gear in which the first primary gearwheel is engaged with the first secondary gearwheel;
- a second gear where the second primary gearwheel is engaged with the second secondary gearwheel;
- a third gear where the third primary gearwheel is engaged with the third secondary gearwheel; and
- a fourth gear in which one of the first movable element or the second movable element is in the active position and engages two of the secondary gearwheels together, causing a reduction or a multiplication of the gear.

Thanks to this feature, four gears can be achieved, which is sufficient for an electric motorbike with three gearwheel sets, providing a reduced cost, simpler and lighter weight gear change than conventional motorbike gearboxes.

According to a preferred embodiment, the first movable element, in its active position, engages the first secondary gearwheel to the second secondary gearwheel, and the second movable element, in its active position, engages the second secondary gearwheel to the third secondary gearwheel.

### Brief description of the drawings

For a better understanding of what has been explained above, some drawings are included in which, schematically and only by way of a non-limiting example, a practical case of embodiment is represented.

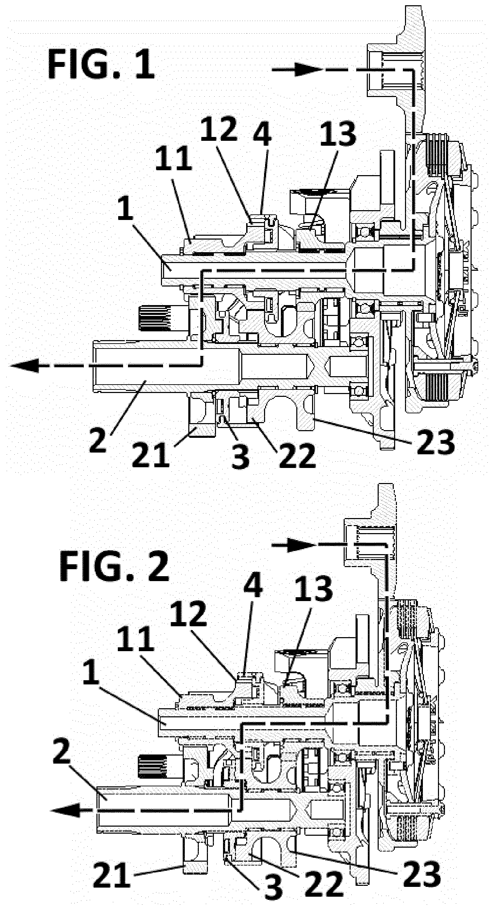

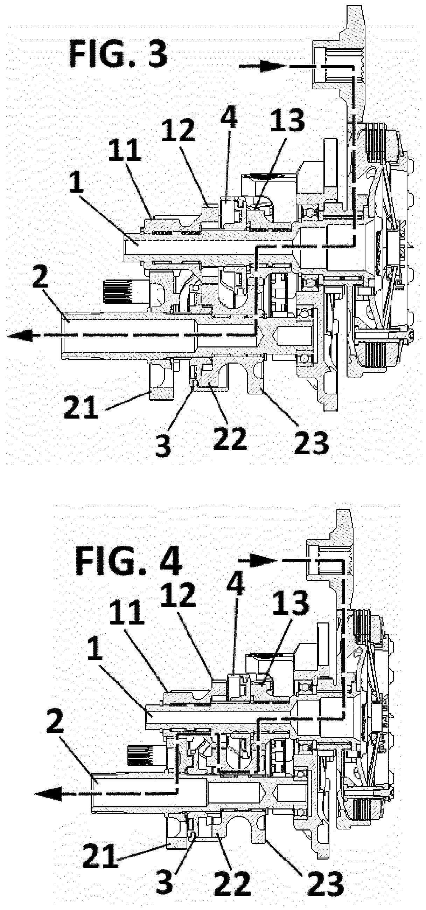

Figures 1 to 4 are sectional views of the gearbox for vehicles according to the present invention, with the gearwheels engaged together to achieve the four gears.

### Description of a preferred embodiment

Figures 1 to 4 show in section the gearbox for vehicles according to the present invention, comprising a primary shaft (1), which at one end receives the motion of a motorbike engine, and a secondary shaft (2) which communicates the motion to a motorbike drive wheel.

On the primary shaft (1) are mounted a first, second and third primary gearwheels (11, 12, 13), and on the secondary shaft (2) are mounted a first, second and third secondary gearwheels (21, 22, 23).

Furthermore, the gearbox according to the present invention also comprises a first and second movable elements (3, 4) which are movable between an active position and an inactive position, moving longitudinally with respect to the primary and secondary shafts (1, 2).

In this way, the gearbox can be set to four different gears, which are shown in figures 1 to 4.
Figure 1 shows the position corresponding to a first gear where the first primary gearwheel (11) is engaged with the first secondary gearwheel (21).
Figure 2 shows the position corresponding to a second gear where the second primary gearwheel (12) is engaged with the second secondary gearwheel (22).
Figure 3 shows the position corresponding to a third gear where the third primary gearwheel (13) is engaged with the third secondary gearwheel (23).
Figure 4 shows the position corresponding to a fourth gear in which the first movable element (3) is in the active position and engages the first and second secondary gearwheels (21, 22) with respect to each other.

It should be noted that in this fourth gear, the second movable element (4) could also be placed in its active position by engaging the second secondary gearwheel (22) with the third secondary gearwheel (23).

The displacement of the first or second movable element (3, 4) depends on whether a reduction or a multiplication of the gear is desired.

In this way, four different gears are achieved using three sets of gearwheels, which is enough for an electric motorbike.

Although reference has been made to a specific embodiment of the invention, it is obvious to a person skilled in the art that the gearbox for vehicles described is susceptible to numerous variations and modifications, and that all the details mentioned can be replaced by technically equivalent ones, without departing from the scope of protection defined by the appended claims.

## Claims

1. Gearbox for vehicles, comprising:
- primary gearwheels (11, 12, 13) located on a primary shaft (1); and
- secondary gearwheels (21, 22, 23) located on a secondary shaft (2); **characterized in that**:
- the primary gearwheels are a first, second and third primary gearwheel (11, 12, 13); and
- the secondary gearwheels are a first, second and third secondary gearwheel (21, 22, 23); and
- the gearbox also comprises a first and second movable elements (3, 4) which are slidable between an active and an inactive position,
so that the gearbox can be placed in:
- a first gear in which the first primary gearwheel (11) is engaged with the first secondary gearwheel (21);
- a second gear wherein the second primary gearwheel (12) is engaged with the second secondary gearwheel (22);
- a third gear wherein the third primary gearwheel (13) is engaged with the third secondary gearwheel (23); and
- a fourth gear in which one of the first movable element (3) or the second movable element (4) is in the active position and engages two of the secondary gearwheels (21, 22, 23) with each other, causing a reduction or a multiplication of the gear.

2. Gearbox for vehicles according to claim 1, wherein the first movable element (3), in its active position, engages the first secondary gearwheel (21) with the second secondary gearwheel (22).

3. Gearbox for vehicles according to claim 1, wherein the second movable element (4), in its active position, engages the second secondary gearwheel (22) with the third secondary gearwheel (23).
